# EUROPEAN PATENT APPLICATION

(11) **EP 4 530 190 A1**
(43) Date of publication of application: **02.04.2025**
(21) Application number: 24200786.2
(22) Date of filing: 17.09.2024
(51) Int. Cl.: B64D 15/12, B64D 15/16

(54) **ICE PROTECTION SYSTEM HAVING MEMORY-BASED ICE REMOVAL ELEMENTS**

(30) Priority: 29.09.2023 IN 202311065715
(71) Applicant: Goodrich Corporation, Charlotte, NC 28217-4578 (US)
(72) Inventor: SHEKHARAPPA, Pallavi Doddenahalli, 573122 Hassan (IN); RAO, Sreekanth, 560061 Bangalore (IN); GUNDU, Srinivas Magaji, 560064 Bangalore, Karnataka (IN); ACHARYA, Pradeep, 560072 Bangalore (IN)
(74) Representative: Dehns

(57) **Abstract**

A protection system including a removal element (120) having shape-memory characteristics. The shape-memory characteristics have been configured to define a first shape of the removal element (120) and a second shape of the removal element (120). When the removal element (120) is in the first shape, the removal element (120) is in a first position with respect to a to-be-protected (TBP) region of a structure. When the removal element (120) is in the second shape, the removal element (120) is in a second position with respect to the TBP region of the structure. The removal element (120) is responsive to an activation that prompts the removal element to, under influence of the shape-memory characteristics, take on the second shape.

## Description

### CROSS-REFERENCE TO RELATED APPLICATIONS

This application claims the benefit of Indian Application No. 202311065715 filed September 29, 2023, the disclosure of which is incorporated herein by reference in its entirety.

### BACKGROUND

The present disclosure relates to ice protection systems (IPSs) and, more particularly, to a novel IPS having memory-based ice removal elements.

Aircraft and engine ice protection systems are generally designed to prevent ice from forming or remove the ice after it has formed. The latter type of system is referred to as a de-icing system, and the former is referred to as an anti-icing system. De-icing and anti-icing systems can be referred to generally as ice protection systems (IPS). Various modes of IPS include pneumatic, electro-thermal and electro-mechanical expulsion systems. A common feature of known IPS is the application of some type of external influence to dislodge ice that has formed on the aircraft.

In pneumatic systems, mechanical stress applied by inflatable rubber bladders can be used to remove ice. The pneumatic system is initiated by activating an actuator that expands the inflatable rubber bladders such that, when they expand, ice is sheared, cracked and flaked off. The actuator can be installed as a thin cap (a boot) that covers the ice prone area.

### BRIEF DESCRIPTION

Disclosed is a protection system including a removal element having shape-memory characteristics. The shape-memory characteristics have been configured to define a first shape of the removal element and a second shape of the removal element. When the removal element is in the first shape, the removal element is in a first position with respect to a to-be-protected (TBP) region of a structure. When the removal element is in the second shape, the removal element is in a second position with respect to the TBP region of the structure. The removal element is responsive to an activation that prompts the removal element to, under influence of the shape-memory characteristics, take on the second shape.

In addition to one or more of the features described herein, the removal element is responsive to an inactivation that prompts the removal element to, under influence of the shape-memory characteristics, take on the first shape.

In addition to one or more of the features described herein, the shape-memory characteristics include an electroactive shape-memory effect; and the influence of the shape-memory characteristics includes influence of the electroactive shape-memory effect.

In addition to one or more of the features described herein, the removal element includes conductive nanowires.

In addition to one or more of the features described herein, the removal element further includes a polymer.

In addition to one or more of the features described herein, the removal element taking on the second shape ruptures ice formed on the removal element.

In addition to one or more of the features described herein, the removal element taking on the first shape assists with protecting the TBP region of the structure from the ice.

In addition to one or more of the features described herein, the activation generates heat within the removal element.

In addition to one or more of the features described herein, the heat passes through the removal element to the ice.

In addition to one or more of the features described herein, the activation is generated by a controller responsive a determination that the ice is formed on the removal element.

Disclosed is a protection system including a controller electronically coupled to a removal element having shape-memory characteristics. The shape-memory characteristics have been configured to define a first shape of the removal element and a second shape of the removal element. When the removal element is in the first shape, the removal element is in a first position with respect to a TBP region of a structure. When the removal element is in the second shape, the removal element is in a second position with respect to the TBP region of the structure. The controller generates an activation that prompts the removal element to, under influence of the shape-memory characteristics, take on the second shape.

In addition to one or more of the features described herein, the controller further generates an inactivation that prompts the removal element to, under influence of the shape-memory characteristics, take on the first shape.

In addition to one or more of the features described herein, the shape-memory characteristics include an electroactive shape-memory effect; and the influence of the shape-memory characteristics includes influence of the electroactive shape-memory effect.

In addition to one or more of the features described herein, the removal element includes conductive nanowires and a polymer.

In addition to one or more of the features described herein, the removal element taking on the second shape ruptures ice formed on the removal element; the removal element taking on the first shape assists with protecting the TBP region of the structure from the ice; the activation generates heat that passes through the removal element to the ice; and the controller generates the activation responsive a determination that the ice is formed on the removal element.

Disclosed is a method that includes performing fabrication operations to form a protection system. The fabrication operations include providing a removal element having shape-memory characteristics. The fabrication operations further include configuring the shape-memory characteristics to define a first shape of the removal element and a second shape of the removal element. When the removal element is in the first shape, the removal element is in a first position with respect to a TBP region of a structure. When the removal element is in the second shape, the removal element is in a second position with respect to the TBP region of the structure. The fabrication operations further include configuring the removal element to be responsive to an activation that prompts the removal element to, under influence of the shape-memory characteristics, take on the second shape.

In addition to one or more of the features described herein, the fabrication operations further include configuring the removal element to be responsive to an inactivation that prompts the removal element to, under influence of the shape-memory characteristics, take on the first shape.

In addition to one or more of the features described herein, the shape-memory characteristics include an electroactive shape-memory effect; and the influence of the shape-memory characteristics includes influence of the electroactive shape-memory effect.

In addition to one or more of the features described herein, the removal element includes conductive nanowires and a polymer.

In addition to one or more of the features described herein, the removal element taking on the second shape ruptures ice formed on the removal element; the removal element taking on the first shape assists with protecting the TBP region of the structure from the ice; the activation generates heat that passes through the removal element to the ice; and the activation is generated by a controller responsive a determination that the ice is formed on the removal element.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a simplified block diagram illustrating a system in accordance with embodiments of the disclosure;
FIG. 2 is a simplified block diagram illustrating a system in accordance with embodiments of the disclosure;
FIG. 3 is a flow diagram illustrating a methodology in accordance with embodiments of the disclosure;
FIG. 4 is a diagram and a graph illustrating aspects of the present disclosure;
FIG. 5 illustrates equations used in accordance with aspects of the present disclosure;
FIG. 6 depicts a table illustrating aspects of the invention;
FIG. 7 is a flow diagram illustrating a methodology in accordance with embodiments of the disclosure;
FIG. 8 illustrates a methodology in accordance with embodiments of the disclosure;
FIG. 9 is a simplified block diagram illustrating a control system operable to implement embodiments of the disclosure; and
FIG. 10 is a simplified block diagram illustrating a computing system operable to implement embodiments of the disclosure.

### DETAILED DESCRIPTION

A detailed description of one or more embodiments of the disclosed apparatus and method are presented herein by way of exemplification and not limitation with reference to the Figures.

When a supercooled droplet strikes an object such as the surface of an aircraft, the impact destroys the internal stability of the droplet and raises its freezing temperature, thus making the droplet easier to freeze. Ice on an aircraft during flight has a variety of negative impacts, including decreased lift, increased weight, decreased thrust, and increased drag.

As previously noted herein, aircraft and engine ice protection systems are generally designed to prevent ice from forming or remove the ice after it has formed. The latter type of system is referred to as a de-icing system, and the former is referred to as an anti-icing system. De-icing and anti-icing systems can be referred to generally as ice protection systems (IPS). Various modes of IPS include pneumatic, electro-thermal and electro-mechanical expulsion systems. A common feature of known IPS is the application of some type of external influence to dislodge ice that has formed on the aircraft.

In pneumatic systems, mechanical stress applied by inflatable rubber bladders can be used to remove ice. The pneumatic system is initiated by activating an actuator that expands the inflatable rubber bladders such that, when they expand, ice is sheared, cracked and flaked off. The actuator can be installed as a thin cap (a boot) that covers the ice prone area. Rubber pneumatic caps/boots are prone to damage from weather and foreign objects. Further, they cannot remove thin layers of ice. Common failure points of rubber pneumatic caps/botts include separation from aircraft skin; rupture; cracking; cold cracking; balloon burst; stitch failure; abrasions; cuts; tears; failure to inflate/deflate; ice bridging; and a relatively large number of electronic systems is required in order to run and control pneumatic systems.

Exemplary embodiments of the disclosure provide a novel IPS having a memory-based ice removal element operable to include shape-memory characteristics. Durin fabrication of the removal element, the shape-memory characteristics are configured to define a first shape of the removal element and a second shape of the removal element. When the removal element is in the first shape, the removal element is in a first position with respect to a to-be-protected (TBP) region of a structure (e.g., an aircraft wing). When the removal element is in the second shape, the removal element is in a second position with respect to the TBP region of the structure. The removal element is responsive to an activation that prompts the removal element to, under influence of the shape-memory characteristics, take on the second shape. The removal element is also responsive to an inactivation that prompts the removal element to, under influence of the shape-memory characteristics, take on the first shape. In some embodiments of the disclosure, the removal element includes conductive nanowires and a polymer.

In embodiments of the disclosure, the removal element taking on the second shape ruptures ice formed on the removal element, and the removal element taking on the first shape assists with protecting the TBP region of the structure from the ice. In some embodiments of the disclosure, the activation generates heat that passes through the removal element to the melt the ice and assist with rupturing the ice. The activation can be generated by a controller responsive a determination that the ice is formed on the removal element.

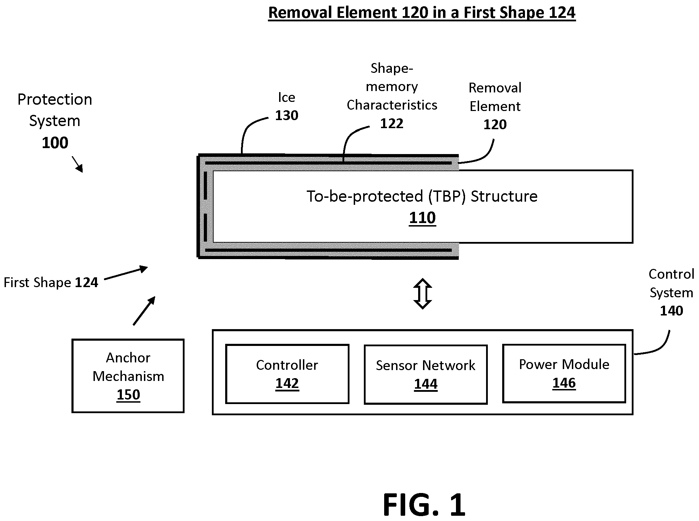

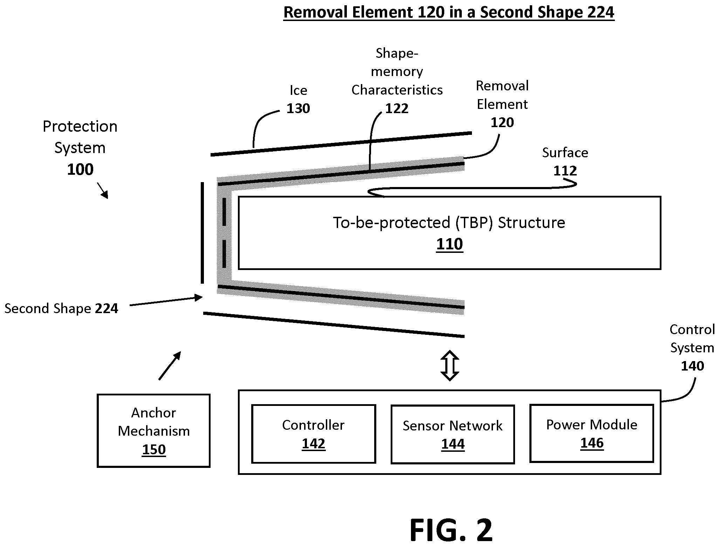

Turning now to a more detailed description of aspects of the disclosure, FIG. 1 and FIG. 2 are simplified block diagrams illustrating a protection system 100 in accordance with embodiments of the disclosure. More specifically, FIG. 1 illustrates a removal element 120 of the system 100 while the removal element 120 is in a first shape 124; and FIG. 2 illustrates the removal element 120 of the system 100 while the removal element 120 is in a second shape 224. As shown in FIG. 1, the protection system 100 includes the removal element 120 electronically coupled to a control system 140 and electronically and/or mechanically coupled to an anchor mechanism 150. The control system 140 includes a controller 142, a sensor network 144 and a power module 146, configured and arranged as shown. The controller 142 applies various control and/or shape-formation signals to the removal element 120; the sensor network 144 senses various parameter (e.g., formation and thickness of the ice 130) related to the shape-formation and operation of the removal element 120 and provides the same to the controller 142; and the power module 146 provides all of the power requirements of the protection system 100. The removal element 120 includes shape-memory characteristics 122 and is formed over a surface 112 (best shown in FIG. 2) of a to-be-protected (TBP) structure 110. As best shown in FIG. 1, a layer of ice 130 has formed on the removal element 120 while the removal element 120 has the first shape 124. When the removal element 120 takes on the first shape 124, the removal element 120 is in a first position with respect to the TBP structure 110 and the surface 112 such that the removal element 120 prevents the ice 130 from forming on the surface 112. When the removal element 120 takes on the second shape 224, the removal element 120 is in a second position with respect to the TBP structure 110 and the surface 112 (or TBP surface 112) such that the removal element 120 ruptures and substantially removes the ice 130 that formed on the removal element 120. The anchor mechanism 150 is any suitable electronically-controlled and/or electro-mechanically controlled mechanism that secures the removal element 120 so that it does not completely fall away from the TBP structure 110 as the removal element 110 moves back and forth between the first shape 124 and the second shape 224 (shown in FIG. 2).

The shapes, positions, and sizes of the TBP structure 110, the removal element 120, the first shape 124, the second shape 224 and the ice 130 in FIGS. 1 and 2 are for ease of illustration and description. In embodiments of the disclosure, various shapes, positions, and sizes of the TBP structure 110, the removal element 120, the first shape 124, the second shape 224 and the ice 130 can be provided. Additionally, the removal element 120 can include a protective housing (now shown separately from the removal element 120) that protects the main functional components (e.g., the polymer and the conductive nanowires) of the removal element 120 from harsh environmental elements that can impact (e.g., where the TBP structure 110 is an aircraft wing).

Similarly, the components of the control system 140 are depicted in the Figures as separate components for ease of illustration and explanation. In embodiments of the disclosure, the components of the control system 140 can be integrated with one another in any suitable combination. For example, the controller 142 and the power module 146 can be integrated into one component. As another example, some operations of the controller 142 can be distributed to local processor functionality provided in the sensor network 144 (e.g., forming a smart sensor or an IoT device) and/or the power module 146 (e.g., forming a smart power module).

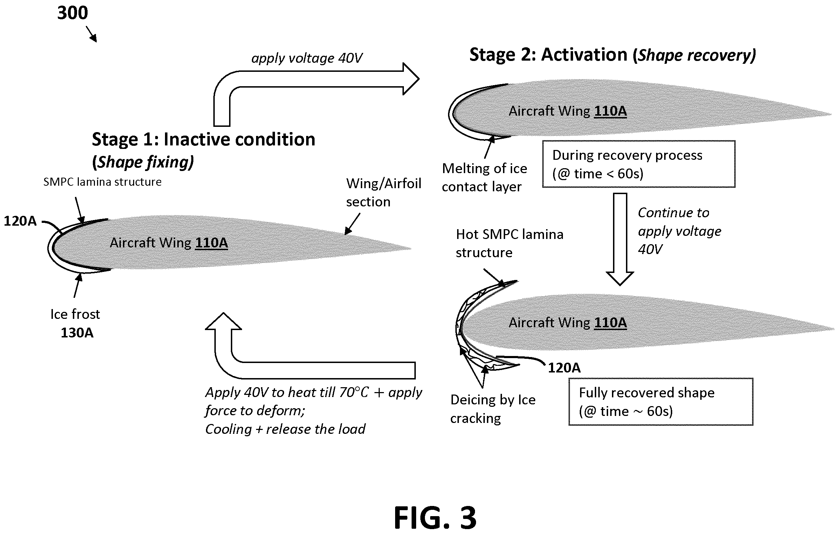

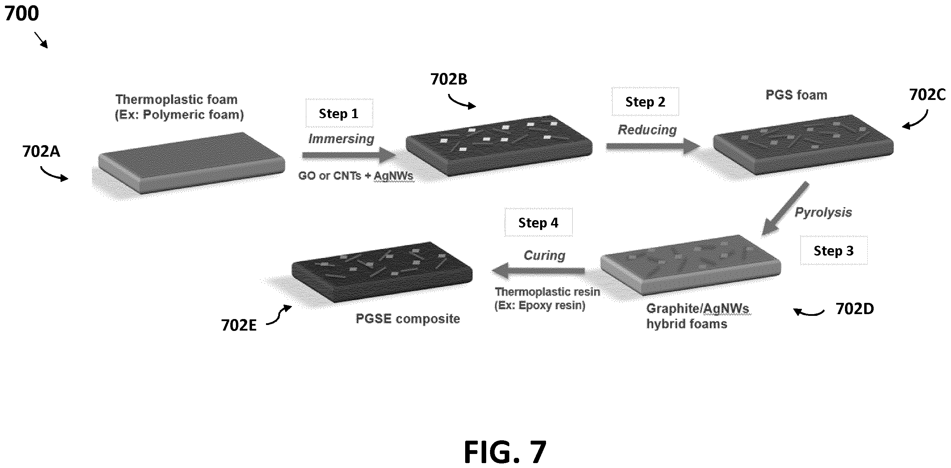

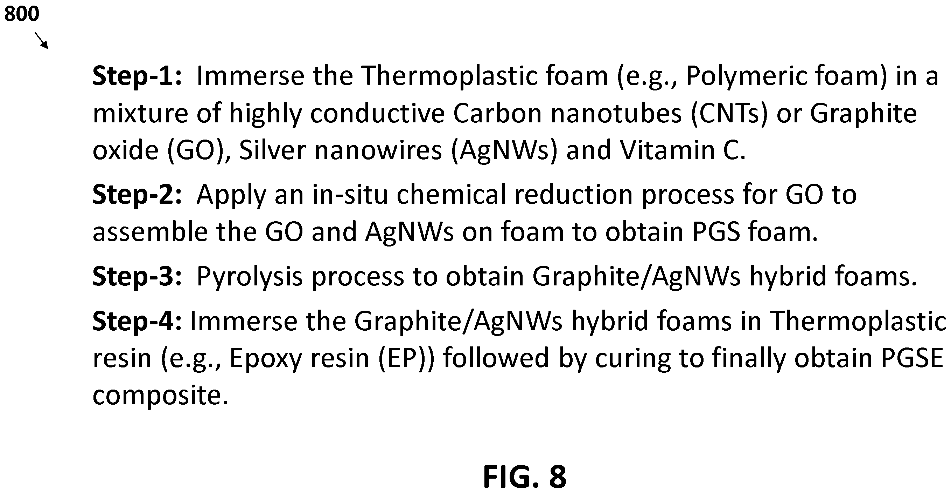

In accordance with aspects of the disclosure, the shape-memory characteristics 122 of the removal element 120 are used to set the first shape 124 of the removal element 120 and further set the second shape 224 (shown in FIG. 2) of the removal element 120. In a non-limiting example implementation of aspects of the disclosure, the removal element 120 can include a flexible polymer having a network of conductive nanowires embedded therein; and the flexible polymer and the conductive nanowires, operating under the influence a current applied to the removal element 120 (e.g., through the network of nanowires), provide some or all of the shape-memory characteristics 122 of the removal element 120. In some embodiments of the disclosure, the second shape 224 can be set by fabricating the removal element 120 in the desired second shape 224. In some embodiments of the disclosure, the first shape 124 can be set by placing and holding the removal element 120 in the first shape 124 and applying a current (e.g., using the controller 142 and the power module 146) for a duration of time. Upon application of an activation (e.g., a current supplied to the removal element 120 by the power module 146 and the controller 142), the removal element 120 will, in effect, "remember" or "recover" its original shape, which is the second shape 224. In aspects of the disclosure, the shape-memory characteristics 122 that enable the removal element 120 to, in effect, "remember" or "recover" its original shape leverage the electroactive shape-memory effect built into the removal element 120 during fabrication thereof. Non-limiting examples of how the removal element 120 can be fabricated in accordance with aspects of the disclosure are depicted in FIGS. 7 and 8 and described in greater detail subsequently herein. In some embodiments of the disclosure, the activation, when implemented as a current through the network of conductive nanowires of the removal element 120, in sufficient cause some or all of the conductive nanowires to exhibit Joule heating in response to applied current. The generated heat can pass through the flexible polymer portion of the removal element 120 to the ice 130 to initiate a process of melting the ice 130 concurrently with the removal element 120 taking on the second shape 224. Non-limiting examples of how the first shape 124 and the second shape 224 can be set for some embodiments of the removal element 120 are depicted in FIG. 3-6 and described in greater detail subsequently herein.

The removal element 120 having shape-memory characteristics 122 in accordance with aspects of the disclosure absorbs less stress and experiences fewer failures than known pneumatic boot-activated rubber bladders because the removal element 120 does not change position/shape under the influence of an external mechanical force but instead changes position under the influence of its own internal structure, which imparts very little stress to the removal element 120. Thus, the construction and operation of the removal element 120 significantly reduces the likelihood of the removal element 120 experiencing common failures such as ruptures; cracking (cold cracking); balloon/burst; stitch failure; abrasion/cuts/tears; failure to inflate/deflate; air connection failure; and ice bridging, all of which are observed in pneumatic boot-activated rubber bladders used in known IPSs.

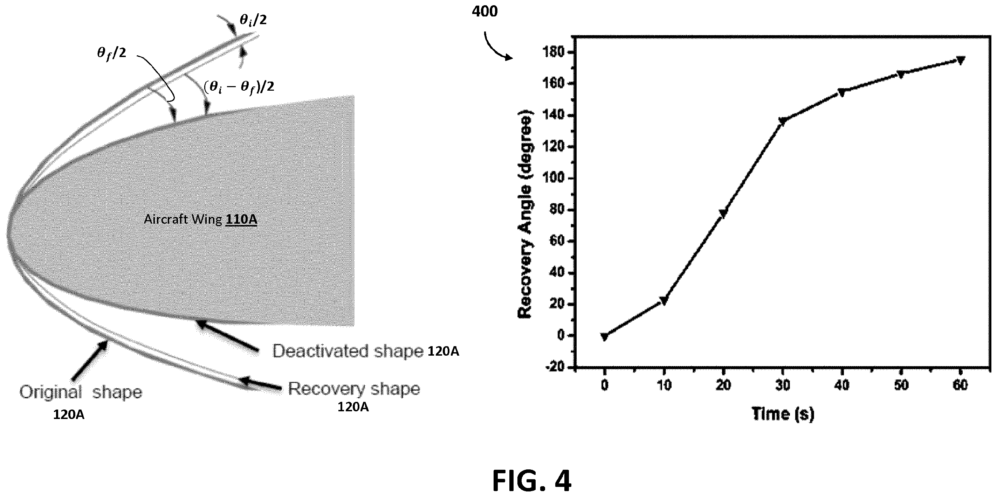

FIG. 3 is a flow diagram illustrating a methodology 300 in accordance with embodiments of the disclosure. In the methodology 300, the TBP structure 110 is implemented as an aircraft wing 110A, and the removal element 120 is implemented as a shape-memory polymer composite (SMPC) laminate structure, referenced herein as SMPC 120A. Stage 1 depicts an inactive or shape fixing condition of the SMPC 120A. Prior to shape fixing, the SMPC 120A has been fabricated to have an initial or original shape, and this initial/original shape corresponds the second shape 224 shown in FIG. 2. During shape fixing, the controller 142 working in tandem with the power module 146 applies a voltage (e.g., about 40V) through a conductive wire (e.g., copper) fixed at each end of the SMPC 120A to heat it to a predetermined temperature (e.g., about 70°C). The predetermined temperature is maintained for a predetermined duration (e.g., a few seconds) to attain uniform heat distribution. A force is applied to the SMPC 120A to deform the SMPC 120A from its initial/original shape to structure to the angle *θi* (shown in FIG. 4) around the leading edge of the aircraft wing 110A. The controller 142 stops the electric supply while maintaining the force to allow the SMPC 120A to cool. Upon removing the force after cooling, a small elastic recovery can be seen, and an angle *θfix* (shown in FIG. 4) is obtained.

Stage 2 depicts activation or shape recover operations of the SMPC 120A under control of the controller 142. In shape recovery/activation, the controller 142 applies an activation (e.g., a voltage of about 40V) to the SMPC 120A, which prompts the SMPC 120A to recover its original, as-fabricated shape. Complete shape recovery (angle *θi-θf*) (shown in FIG. 4) can be observed within a predetermined activation time (e.g., about 60 seconds). During activation (or electro-activation), heat energy from the activation voltage is released from the SMPC 120A and melts the ice 130 at the interface between ice 130 and the SMPC 120A, thereby assisting with rupturing and dislodging the ice 130 from the SMPC 120A. Upon complete shape recovery of the SMPC 120A, the expanded shape of the SMPC 120A ruptures and/or shreds the ice 130 and airflow blows the ice 130 off of the SMPC 120A.

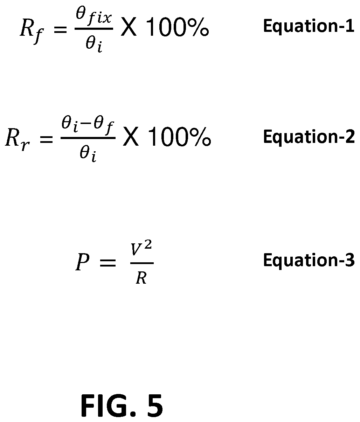

FIG. 4 is a diagram and a graph 400 illustrating aspects of the present disclosure; and FIG. 5 illustrates equations used in accordance with aspects of the present disclosure. More specifically, FIGS. 4 and 5 illustrate how shape fixity & recovery ratios and power can be computed in accordance with aspects of the disclosure. Shape fixity (*Rf*) and recovery (*Rr*) can be defined as the ability of the SMPC 120A to retain a temporary shape and recover its original shape, respectively. *Rf* and *Rr* can be found using Equation-1 and Equation 2 shown in FIG. 5. In embodiments of the disclosure, the SMPC 120A can formed using a graphite/silver nanowires/epoxy resin (known in the art by the acronym "PGSE") composite with a volume ratio of AgNWs to graphite of about 1: 1. Using this configuration of materials, the porous polymer foam works as the skeleton of the SMPC 120A by forming 3-dimensional graphite structure whereas the silver nanowires act as the continuous conductive network. Experimental study has shown that PGSE showed *Rf* and Rr values of nearly 99% and 97%, respectively.

If it is assumed that shape fixity is about 99% and the required *θi* is about 60°, *θfix* (angle obtained after elastic recovery during shape fixing) can be obtained as *θfix* = 0.99 x 60, which results in *θfix =* 59.4 degrees. If it is assumed that *Rr* is about 97%, *θf* can be found as *θf* = (1-0.97) x 60 = 1.8°; and the shape recovery speed is (*θi* - *θf*)/*t*) = 0.97 deg/seconds (t= 60 seconds). In terms of the power required, the approximate resistance of PGSE (both wings) obtained from the conductivity is 10.4 ohms. Using the input voltage of about 40V and obtained resistance, the power required for activation can be calculated using Equation-3 shown in FIG. 5 as about 154 Watts. The graph 400 shown in FIG. 4 depicts the variation of the recovery angle of PGSE composite material with 10 wt% (weight percentage) graphite sheets and 3wt% AgNWs under a voltage of about 40 volts.

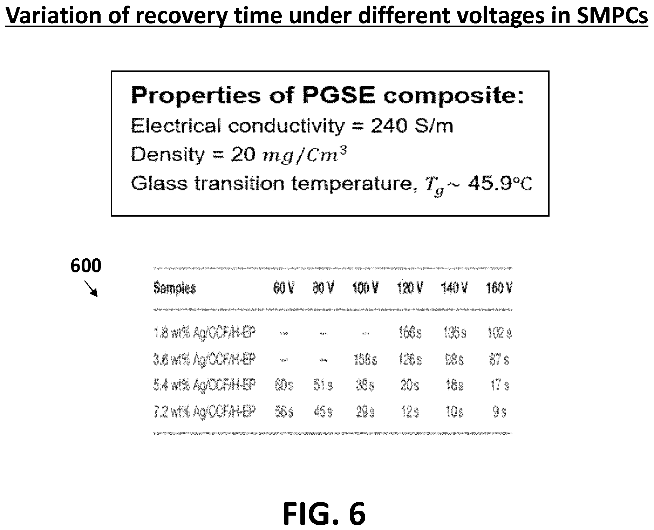

FIG. 6 depicts a table 600 illustrating properties of PGSE composites that can be used in aspects of the invention. The PGSE structure's manufactured shape will be in accordance with the required angle of activation/recovery shape with respect to the surface 112 (shown in FIG. 1). Inactivation of the SMPC 120A is accomplished by deforming & fixing the SMPC 120A around the TBP structure 110 (e.g., the aircraft wing 110A). Upon activation under operation of the controller 142 and the power module 146, the SMPC 120A will recover its original shape due to the electroactive shape-memory effect, causing the ice 130 to shear and blown off by airflow. The proposed PGSE composite has demonstrated conductivity, thermal stability and shape recovery that can be triggered within about 60 seconds by application of an about 0.8V/mm electric field. By increasing the input voltage, recovery time can be reduced to below 10 seconds. In sum, PGSE composites provide high and reliable electrical conductivity & thermal stability; high and reliable shape fixity and recovery ratios; high and reliable mechanical strength, and stiffness; shape recovery without an external heat source; and ease of fabrication using readily available raw materials & shape controllability.

FIGS. 7 and 8 are flow diagrams illustrating a methodology 700, 800 for fabricating a SMPC 120A in accordance with embodiments of the disclosure. The methodology 700 begins by providing a thermoplastic foam 702A (e.g., a polymeric foam). At Step-1 (shown in FIG. 8), the thermoplastic foam 702A is immersed in a mixture of highly conductive carbon nanotubes (CNTs) or graphite oxide (GO), silver nanowires (AgNWs), and vitamin C, thereby generating intermediate structure 702B. At Step-2, an in-situ chemical reduction process is applied for GO to assemble the GO and AgNWs on foam to obtain the PGS (Poly (glycerol sebacate) ) foam structure 702C. At Step-3, a pyrolysis process is applied to obtain the graphite/AgNWs hybrid foams structure 702D. At Step-4, the graphite/AgNWs hybrid foams structure 702D is immersed in thermoplastic resin (e.g., epoxy resin (EP)) followed by curing to obtain the PGSE composite structure 702E.

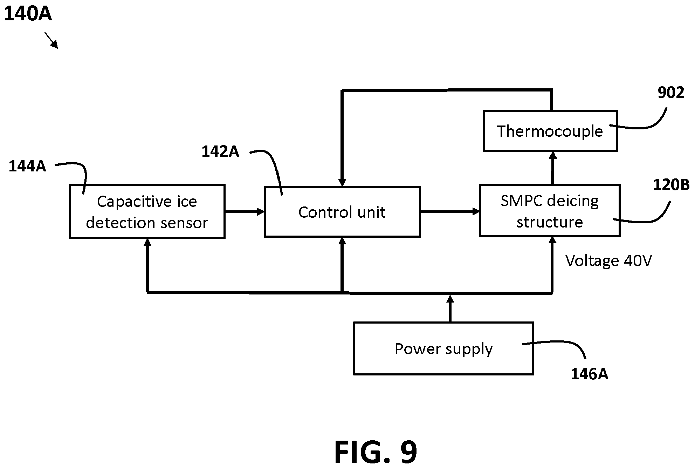

FIG. 9 is a simplified block diagram illustrating a non-limiting example of how the control system 140 (shown in FIG. 1) can be implemented as a control system 140A, which includes a control unit 142A (corresponds to the controller 142), a power supply 146A (corresponds to the power module 146), a capacitive ice detection sensor 144A (corresponds to the sensor network 144), and a thermocouple element 902, configured and arranged as shown. Additionally, the SMPC deicing structure 120B corresponds to the removal element 120 and the SMPC 120A. The control system 140A performs all of the operations performed by the control system 140 but further uses the capacitive sensors 144A to generate sensor input upon ice formation (the ice 130 shown in FIG. 1). The control unit 142A and the power suppl 146A generate the necessary activation signals and instructions to activate the SMPC deicing structure 120B. The thermocouple 902 can be used to sense the temperature associated with the SMPC deicing structure 120B and limit the electric supply after reaching desired temperature, thereby avoiding excessive power supply usage. In embodiments of the disclosure, the sensors 144A continuously detect ice formation on an associated surface and send data to the controller 142A.

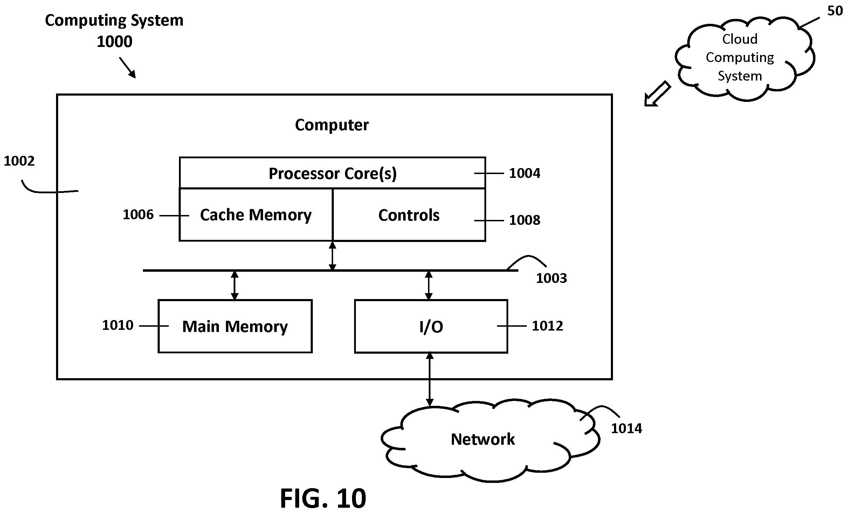

FIG. 10 illustrates an example of a computer system 1000 that can be used to implement the computer-based components in accordance with aspects of the disclosure. The computer system 1000 includes an exemplary computing device ("computer") 1002 configured for performing various aspects of the content-based semantic monitoring operations described herein in accordance aspects of the disclosure. In addition to computer 1002, exemplary computer system 1000 includes network 1014, which connects computer 1002 to additional systems (not depicted) and can include one or more wide area networks (WANs) and/or local area networks (LANs) such as the Internet, intranet(s), and/or wireless communication network(s). Computer 1002 and additional system are in communication via network 1014, e.g., to communicate data between them.

Exemplary computer 1002 includes processor cores 1004, main memory ("memory") 1010, and input/output component(s) 1012, which are in communication via bus 1003. Processor cores 1004 includes cache memory ("cache") 1006 and controls 1008, which include branch prediction structures and associated search, hit, detect and update logic, which will be described in more detail below. Cache 1006 can include multiple cache levels (not depicted) that are on or off-chip from processor 1004. Memory 1010 can include various data stored therein, e.g., instructions, software, routines, etc., which, e.g., can be transferred to/from cache 1006 by controls 1008 for execution by processor 1004. Input/output component(s) 1012 can include one or more components that facilitate local and/or remote input/output operations to/from computer 1002, such as a display, keyboard, modem, network adapter, etc. (not depicted).

A cloud computing system 50 is in wired or wireless electronic communication with the computer system 1000. The cloud computing system 50 can supplement, support or replace some or all of the functionality (in any combination) of the computing system 1000. Additionally, some or all of the functionality of the computer system 1000 can be implemented as a node of the cloud computing system 50.

In some embodiments of the disclosure, the generation of the appropriate control signals described herein (e.g., activation, inactivation, shape setting signals, and the like) that are in some instances responsive to the outputs of the sensor network 144 can be configured as machine learning tasks, and the controller 142 can be configured to include machine learning algorithms configured and arranged to perform the removal element control operations described herein as machine learning tasks. In general, machine learning techniques are run on so-called "neural networks," which can be implemented as programmable computers configured to run sets of machine learning algorithms and/or natural language processing algorithms. Neural networks incorporate knowledge from a variety of disciplines, including neurophysiology, cognitive science/psychology, physics (statistical mechanics), control theory, computer science, artificial intelligence, statistics/mathematics, pattern recognition, computer vision, parallel processing and hardware (e.g., digital/analog/VLSI/optical).

The basic function of neural networks and their machine learning algorithms is to recognize patterns by interpreting unstructured sensor data through a kind of machine perception. Unstructured real-world data in its native form (e.g., from the sensor(s) 144A) is converted to a numerical form (e.g., a vector having magnitude and direction) that can be understood and manipulated by a computer. The machine learning algorithm performs multiple iterations of learning-based analysis on the real-world data vectors until patterns (or relationships) contained in the real-world data vectors are uncovered and learned. The learned patterns/relationships function as predictive models that can be used to perform a variety of tasks, including, for example, classification (or labeling) of real-world data and clustering of real-world data. Classification tasks often depend on the use of labeled datasets to train the neural network (i.e., the model) to recognize the correlation between labels and data. This is known as supervised learning. Examples of classification tasks include identifying objects in images (e.g., stop signs, pedestrians, lane markers, etc.), recognizing gestures in video, detecting voices, detecting voices in audio, identifying particular speakers, transcribing speech into text, and the like. Clustering tasks identify similarities between objects, which the clustering task groups according to those characteristics in common and which differentiate them from other groups of objects. These groups are known as "clusters."

Many of the functional units of the systems described in this specification have been labeled as modules. Embodiments of the disclosure apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the disclosure, the functions performed by the various components/modules/models can be distributed differently than shown without departing from the scope of the various embodiments of the disclosure describe herein unless it is specifically stated otherwise.

Aspects of the disclosure can be embodied as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The terms "about," "substantially," and equivalents thereof are intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A protection system comprising:
a removal element (120) having shape-memory characteristics (122);
wherein the shape-memory characteristics have been configured to define a first shape of the removal element (120) and a second shape of the removal element (120);
wherein, when the removal element (120) is in the first shape, the removal element (120) is in a first position with respect to a to-be-protected "TBP" region of a structure;
wherein, when the removal element (120) is in the second shape, the removal element (120) is in a second position with respect to the TBP region of the structure; and
wherein the removal element (120) is responsive to an activation that prompts the removal element (120) to, under influence of the shape-memory characteristics (122), take on the second shape.

2. The protective system of claim 1, wherein the removal element (120) is responsive to an inactivation that prompts the removal element (120) to, under influence of the shape-memory characteristics, take on the first shape.

3. The protective system of claim 1 or 2, wherein:
the shape-memory characteristics (122) comprise an electroactive shape-memory effect; and
the influence of the shape-memory characteristics (122) comprises influence of the electroactive shape-memory effect.

4. The protective system of any preceding claim, wherein the removal element (120) comprises conductive nanowires, and/or wherein the removal element (120) further comprises a polymer.

5. The protective system of any preceding claim, wherein the removal element (120) taking on the second shape ruptures ice (130) formed on the removal element (120).

6. The protective system of claim 5, wherein the removal element (120) taking on the first shape assists with protecting the TBP region of the structure from the ice.

7. The protective system of claim 6, wherein the activation generates heat within the removal element (120), and optionally wherein the heat passes through the removal element (120) to the ice (130), and optionally wherein the activation is generated by a controller responsive a determination that the ice is formed on the removal element (120).

8. A protection system comprising:
a controller electronically coupled to a removal element (120) having shape-memory characteristics;
wherein the shape-memory characteristics (122) have been configured to define a first shape of the removal element (120) and a second shape of the removal element (120);
wherein, when the removal element (120) is in the first shape, the removal element (120) is in a first position with respect to a to-be-protected "TBP" region of a structure;
wherein, when the removal element (120) is in the second shape, the removal element (120) is in a second position with respect to the TBP region of the structure; and
wherein the controller generates an activation that prompts the removal element (120) to, under influence of the shape-memory characteristics, take on the second shape.

9. The protective system of claim 8, wherein the controller further generates an inactivation that prompts the removal element (120) to, under influence of the shape-memory characteristics, take on the first shape.

10. The protective system of claim 8 or 9, wherein:
the shape-memory characteristics (122) comprise an electroactive shape-memory effect; and
the influence of the shape-memory characteristics (122) comprises influence of the electroactive shape-memory effect.

11. The protective system of any of claims 8 to 10, wherein the removal element (120) comprises conductive nanowires and a polymer.

12. The protective system of any of claims 8 to 11, wherein:
the removal element (120) taking on the second shape ruptures ice (130) formed on the removal element (120);
the removal element (120) taking on the first shape assists with protecting the TBP region of the structure from the ice (130);
the activation generates heat that passes through the removal element (120) to the ice; and
the controller generates the activation responsive a determination that the ice is formed on the removal element (120).

13. A method comprising performing fabrication operations to form a protection system, wherein the fabrication operations include:
providing a removal element (120) having shape-memory characteristics (122);
configuring the shape-memory characteristics (122) to define a first shape of the removal element (120) and a second shape of the removal element (120);
wherein, when the removal element (120) is in the first shape, the removal element (120) is in a first position with respect to a to-be-protected "TBP" region of a structure;
wherein, when the removal element (120) is in the second shape, the removal element (120) is in a second position with respect to the TBP region of the structure; and
configuring the removal element (120) to be responsive to an activation that prompts the removal element (120) to, under influence of the shape-memory characteristics, take on the second shape.

14. The method of claim 13, wherein the fabrication operations further comprise configuring the removal element (120) to be responsive to an inactivation that prompts the removal element (120) to, under influence of the shape-memory characteristics, take on the first shape, and/or wherein:
the shape-memory characteristics comprise an electroactive shape-memory effect; and
the influence of the shape-memory characteristics comprises influence of the electroactive shape-memory effect.

15. The method of claim 13 or 14, wherein the removal element (120) comprises conductive nanowires and a polymer, and/or . wherein:
the removal element (120) taking on the second shape ruptures ice formed on the removal element (120);
the removal element (120) taking on the first shape assists with protecting the TBP region of the structure from the ice;
the activation generates heat that passes through the removal element (120) to the ice; and
the activation is generated by a controller responsive a determination that the ice is formed on the removal element (120).
